# EUROPÄISCHE PATENTSCHRIFT

(11) **EP 3 774 143 B1**
(45) Veröffentlichungstag und Bekanntmachung des Hinweises auf die Patenterteilung: **09.03.2022**
(21) Anmeldenummer: 18717924.7
(22) Anmeldetag: 16.04.2018
(51) Int. Cl.: B23B 37/00, H02J 7/00

(54) **ULTRASCHALL-HANDBOHRMASCHINE**
ULTRASONIC HAND-HELD DRILLING MACHINE
PERCEUSE ULTRASONIQUE PORTABLE

(30) Priorität: 26.03.2018 DE 102018107095
(43) Veröffentlichungstag der Anmeldung: 17.02.2021
(73) Patentinhaber: SCHOTT Diamantwerkzeuge GmbH, 37627 Stadtoldendorf (DE)
(72) Erfinder: SITZBERGER, Sebastian, 94513 Schönberg (DE); TRUM, Christian, 94336 Windberg (DE); BENISCH, Michael, Frederik, 93192 Wald (DE)
(74) Vertreter: Wolf, Gerhard
(86) Internationale Anmeldenummer: PCT/EP2018/059630
(87) Internationale Veröffentlichungsnummer: WO 2019/185171

(56) Entgegenhaltungen:
- DE-A1-102016 211 733
- US-B1- 6 329 794

## Beschreibung

Die Erfindung betrifft eine akkubetriebene Ultraschall-Handbohrmaschine sowie ein Verfahren zum Betreiben einer solchen Ultraschall-Handbohrmaschine.

Eine handgeführte Ultraschall-Handbohrmaschine ist bereits aus der Druckschrift DE 20 2017 100 736 U1 bekannt. Diese weist im Unterschied zu Schlagbohrmaschinen anstelle eines Schlagwerks einen Schwingungserreger zur Erzeugung von Ultraschallschwingungen auf, um unterstützt durch diese Ultraschallschwingungen die Bohrleistung zu erhöhen. DE 10 2016 211 733 A1 offenbart eine Ultraschall-Handbohrmaschine nach dem Oberbegriff des Anspruchs 1 und ein Verfahren zum Betreiben einer Ultraschall-Handbohrmaschine nach dem Oberbegriff des Anspruchs 11.

Zudem sind akkubetriebene Handbohrmaschinen bekannt, bei denen ein den Drehantrieb des Bohrwerkzeugs bewirkender Motor durch einen wiederaufladbaren Akkumulator mit elektrischer Energie versorgt wird. Im Unterschied zu Schlagbohrmaschinen, bei denen das Schlagwerk durch den gleichen Motor angetrieben wird, der auch das Bohrwerkzeug rotativ antreibt, bildet die Schwingungserregereinheit, mittels der die Ultraschallschwingung erzeugt wird, eine vom Motor unabhängige Einheit, die unabhängig vom Motor mit elektrischer Energie versorgt werden muss. Die von der Schwingungserregereinheit erzeugte Ultraschallschwingung ist sehr stark von der elektrischen Energieversorgung abhängig, so dass bei einer hohen Belastung des Motors die vom Akkumulator bereitgestellte elektrische Spannung bzw. der Strom abfallen und damit auch die Energie der erzeugten Ultraschallschwingung stark absinken kann, so dass eine wesentlich verschlechterte Bohrleistung auftritt.

Ausgehend hiervon ist es Aufgabe der Erfindung, eine akkubetriebene Ultraschall-Handbohrmaschine anzugeben, die selbst bei hohen Belastungszuständen eine noch hinreichende Bohrleistung ermöglicht.

Die Aufgabe wird durch eine Ultraschall-Handbohrmaschine gemäß den Merkmalen des unabhängigen Patentanspruchs 1 gelöst. Ein Verfahren zum Betreiben einer Ultraschall-Bohrmaschine nach der Erfindung ist Gegenstand des nebengeordneten unabhängigen Patentanspruchs 11. Bevorzugte Ausführungsformen sind Gegenstand der Unteransprüche.

Gemäß einem ersten Aspekt bezieht sich die Erfindung auf eine Ultraschall-Handbohrmaschine. Die Ultraschall-Handbohrmaschine umfasst einen Motor zum rotativen Antrieb eines Bohrwerkzeugs um eine Drehachse und eine Schwingungserregereinheit, die zur Erzeugung von Ultraschallschwingungen ausgebildet ist. Der Motor und die Schwingungserregereinheit werden durch einen Akkumulator mit elektrischer Energie versorgt, vorzugsweise von demselben Akkumulator. Der Motor ist über eine Priorisierungsschaltung mit dem Akkumulator gekoppelt. Die Priorisierungsschaltung ist dazu ausgebildet, zumindest zeitweise die Versorgung der Schwingungserregereinheit mit elektrischer Energie gegenüber der Versorgung des Motors mit elektrischer Energie zu priorisieren. Unter "Priorisieren" im Sinne der vorliegenden Offenbarung wird hierbei insbesondere verstanden, dass die Aufrechterhaltung der Energieversorgung der Schwingungserregereinheit Vorrang gegenüber der Energieversorgung des Motors hat. Anders ausgedrückt hat damit die Erzeugung von Ultraschallschwingungen Vorrang gegenüber dem rotativen Antrieb des Bohrwerkzeugs, da die Bohrleistung wesentlich davon abhängt, ob das Bohrwerkzeug mit Ultraschallschwingungen beaufschlagt ist oder nicht.

Der technische Vorteil der Ultraschall-Handbohrmaschine besteht darin, dass durch die Priorisierungsschaltung verhindert wird, dass die elektrische Energieversorgung der Schwingungserregereinheit derart beeinträchtigt wird, dass es zu einem wesentlichen Einbruch der von der Schwingungserregereinheit bereitgestellten Ultraschallschwingungen kommt. Dadurch kann speziell bei hoher Belastung des Motors weiterhin eine hohe Bohrleistung sichergestellt werden, da die Ultraschallschwingung selbst bei hohen Belastungszuständen weiterhin aufrechterhalten wird.

Vorzugsweise ist der Akkumulator wiederaufladbar ausgebildet.

Gemäß einer Ausführungsform umfasst die Priorisierungsschaltung eine Strombegrenzungsschaltung, die dazu ausgebildet ist, die Stromstärke des den Motor durchfließenden elektrischen Stroms nach oben hin zu begrenzen. Durch diese Strombegrenzungsschaltung ist es möglich, die Energiezuführung zum Motor zeitweise zu begrenzen, insbesondere dann, wenn dem Motor aufgrund hoher Belastung ein derart hoher Strom zugeführt werden müsste, dass eine für die Erzeugung der Ultraschallschwingung hinreichende Energieversorgung der Schwingungserregereinheit nicht mehr sichergestellt werden kann. Dadurch kann über eine Begrenzung des dem Motor zugeführten elektrischen Stroms eine energetische Priorisierung der Schwingungserregereinheit erzielt werden.

Gemäß einer Ausführungsform ist die Strombegrenzungsschaltung dazu ausgebildet, den elektrischen Strom auf einen vorgegebenen Stromstärke-Maximalwert zu begrenzen. Der Stromstärke-Maximalwert kann dabei einen festen, nicht variablen Wert aufweisen. Dieser Stromstärke-Maximalwert ist vorzugsweise derart gewählt, dass bei einem dem Motor zugeführtem elektrischen Strom bis zu diesem Stromstärke-Maximalwert keine oder nur unwesentliche Beeinträchtigungen bei der Erzeugung von Ultraschallschwingungen durch die Schwingungserregereinheit auftreten. Damit kann durch die Strombegrenzungsschaltung sichergestellt werden, dass die Energie der Ultraschallschwingung, mit der das Bohrwerkzeug beaufschlagt wird, stets hinreichend hoch ist.

Gemäß einer Ausführungsform umfasst die Priorisierungsschaltung einen Messschaltungsteil, der zumindest eine betriebszustandsabhängige Messgröße bereitstellt. Zudem ist eine Strombegrenzungsschaltung vorgesehen, die dazu ausgebildet ist, abhängig von dieser betriebszustandsabhängigen Messgröße die Stromstärke des den Motor durchfließenden elektrischen Stroms nach oben hin zu begrenzen. Die betriebszustandsabhängige Messgröße kann beispielsweise eine von dem den Motor durchfließenden elektrischen Strom abhängige Messgröße (z.B. dessen Stromstärke oder eine dazu proportionale Spannung) oder aber auch eine von dem die Schwingungserregereinheit durchfließenden elektrischen Strom abhängige Messgröße (z.B. dessen Stromstärke oder eine dazu proportionale Spannung) sein. Durch die von der betriebszustandsabhängigen Messgröße abhängige Begrenzung der Stromstärke wird erreicht, dass die energetische Priorisierung nur im Bedarfsfall vorgenommen wird, nämlich speziell dann, wenn die betriebszustandsabhängige Messgröße darauf hindeutet, dass ein Einbrechen der Ultraschallschwingung auftritt.

Gemäß einer Ausführungsform ist eine Vergleichseinrichtung vorgesehen ist, die zum Vergleich der betriebszustandsabhängigen Messgröße mit einer Bezugsgröße ausgebildet ist. Ferner ist die Vergleichseinrichtung zum Bereitstellen eines Vergleichsergebnisses ausgebildet, abhängig von dem die Begrenzung des den Motor durchfließenden elektrischen Stroms erfolgt. Die betriebszustandsabhängige Messgröße kann insbesondere eine Größe sein, die von der Stromstärke des den Motor durchfließenden elektrischen Stroms abhängig ist. Die Bezugsgröße kann Informationen über die Höhe der elektrischen Leistung beinhalten, die der Schwingungserregereinheit zugeführt wird. Die Bezugsgröße kann damit entweder eine Größe sein, die von der Stromstärke des die Schwingungserregereinheit durchfließenden elektrischen Stroms abhängig ist oder eine Größe sein, die von dem Gesamtstrom abhängig ist, der von dem Akkumulator bereitgestellt wird.

Gemäß einer Ausführungsform ist die betriebszustandsabhängige Messgröße eine elektrische Größe, die proportional, insbesondere direkt proportional zur Stromstärke des den Motor durchfließenden elektrischen Stroms ist. Die betriebszustandsabhängige Messgröße kann damit beispielsweise die Stromstärke des durch den Motor fließenden Stroms oder eine dazu proportionale Spannung sein (z.B. Spannungsabfall über einem Widerstand oder über einen Hall-Sensor ermittelte Spannung).

Gemäß einer Ausführungsform ist die Bezugsgröße eine elektrische Größe, die proportional, insbesondere direkt proportional zur Stromstärke des die Schwingungserregereinheit durchfließenden elektrischen Stroms oder zum Gesamtstrom ist, der dem Akkumulator entnommen wird. Über die Bezugsgröße kann ein Verhältnis aus der elektrischen Last des Motors und der elektrischen Last der Schwingungserregereinheit ermittelt werden, das ein Indiz dafür ist, welcher Anteil der elektrischen Last durch den Motor verursacht wird. Für den Fall, dass der durch den Motor verursachte Anteil der elektrischen Last einen Schwellwert überschreitet, kann eine energetische Priorisierung der Schwingungserregereinheit vorgenommen werden.

Gemäß einer Ausführungsform umfasst die Priorisierungsschaltung einen Mikrokontroller. Durch diesen Mikrokontroller kann ermittelt werden, ob eine energetische Priorisierung der Schwingungserregereinheit durchgeführt werden soll. Zudem kann die energetische Priorisierung der Schwingungserregereinheit durch den Mikrokontroller gesteuert werden, beispielsweise dadurch, dass überprüft wird, ob bei einer Begrenzung der elektrischen Leistung, die dem Motor zugeführt wird, die von der Schwingungserregereinheit aufgenommene elektrische Leistung ansteigt. Auch kann durch den Mikrokontroller die Begrenzung der dem Motor zugeführten elektrischen Leistung gleitend oder schrittweise erfolgen, um sicherzustellen, dass die dem Motor zugeführte elektrische Leistung nicht zu einer unnötigen Beeinträchtigung des rotativen Antriebs des Bohrwerkzeugs führt.

Gemäß einer Ausführungsform bildet der Mikrokontroller die Vergleichseinrichtung. Der Mikrokontroller kann beispielsweise Eingangsschnittstellen (beispielsweise Schnittstellen mit einer Funktionalität zur Analog/Digital-Wandlung) aufweisen, die Informationen von dem Messschaltungsteil empfangen. Abhängig von diesen Informationen, insbesondere der betriebszustandsabhängigen Messgröße und der Bezugsgröße, kann der Mikrokontroller eine energetische Priorisierung der Schwingungserregereinheit einleiten.

Gemäß einer Ausführungsform ist der Mikrokontroller zur Steuerung der Ultraschall-Handbohrmaschine derart ausgebildet, dass die Versorgung der Schwingungserregereinheit mit elektrischer Energie gegenüber der Versorgung des Motors mit elektrischer Energie zumindest zeitweise priorisiert ist. Dadurch kann erreicht werden, dass die Energiezuführung für den rotativen Antrieb des Bohrwerkzeugs zugunsten der Energiezuführung zur Schwingungserregereinheit gedrosselt wird.

Gemäß einem weiteren Aspekt betrifft die Erfindung ein Verfahren zum Betreiben einer Ultraschall-Handbohrmaschine. Die Ultraschall-Handbohrmaschine weist einen Motor zum rotativen Antrieb eines Bohrwerkzeugs um eine Drehachse, eine Schwingungserregereinheit zur Erzeugung von Ultraschallschwingungen und einen Akkumulator auf, mittels dem der Motor und die Schwingungserregereinheit mit elektrischer Energie versorgt werden. Zudem ist eine Priorisierungsschaltung vorgesehen, mittels der die elektrische Energieversorgung der Schwingungserregereinheit gegenüber der elektrischen Energieversorgung des Motors priorisiert wird.

Gemäß einem Ausführungsbeispiel des Verfahrens wird durch die Priorisierungsschaltung zumindest zeitweise eine Begrenzung der Stromstärke des den Motor durchfließenden elektrischen Stroms nach oben hin bewirkt. Dadurch wird der Schwingungserregereinheit Vorrang bei der Energieversorgung eingeräumt.

Gemäß einem Ausführungsbeispiel des Verfahrens wird die Stromstärke auf einen betriebszustandsunabhängigen maximalen Schwellwert begrenzt. Alternativ wird eine Begrenzung der Stromstärke in Abhängigkeit eines Vergleichs vorgenommen, wobei bei dem Vergleich die Stromstärke des den Motor durchfließenden elektrischen Stroms oder eine dazu proportionale betriebszustandsabhängige Messgröße mit einer Bezugsgröße verglichen wird. Dadurch kann ermittelt werden, wann eine energetische Priorisierung der Schwingungserregereinheit eingeleitet werden soll.

Gemäß einem Ausführungsbeispiel des Verfahrens ist die Bezugsgröße der die Schwingungserregereinheit durchfließende elektrische Strom, der von dem Akkumulator entnommene Gesamtstrom oder die Bezugsgröße wird durch zu diesen Strömen proportionale Messgrößen gebildet.

Gemäß einem Ausführungsbeispiel des Verfahrens erfolgt die Priorisierung der elektrischen Energieversorgung der Schwingungserregereinheit gegenüber der elektrischen Energieversorgung des Motors abhängig vom Ladezustand des Akkumulators. Beispielsweise kann der Mikrokontroller abhängig vom Ladezustand einen Schwellwert festlegen, basierend auf dem die energetische Priorisierung der Schwingungserregereinheit eingeleitet wird. Gemäß einem Ausführungsbeispiel des Verfahrens erfolgt die Priorisierung der elektrischen Energieversorgung der Schwingungserregereinheit gegenüber der elektrischen Energieversorgung des Motors abhängig von dem elektrischen Strom, der der Schwingungserregereinheit zugeführt wird und der Frequenz der Ultraschallschwingung oder einer dazu proportionalen Größe. Für den Fall, dass der die Schwingungserregereinheit durchfließende Strom bei Resonanzfrequenz einen Schwellwert unterschreitet, kann von einer zu hohen elektrischen Last des Motors ausgegangen werden, die die Energieversorgung der Schwingungserzeugereinheit negativ beeinflusst. In diesem Fall wird vorteilhafterweise die energetische Priorisierung der Schwingungserregereinheit eingeleitet.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft und grob schematisch eine Ultraschall-Handbohrmaschine in einer seitlichen Schnittdarstellung;
- Fig. 2: beispielhaft und grob schematisch die elektrische Kopplung des Akkumulators mit dem Motor über eine Priorisierungsschaltung gemäß einem ersten Ausführungsbeispiel; und
- Fig. 3: beispielhaft und grob schematisch die elektrische Kopplung des Akkumulators mit dem Motor über eine Priorisierungsschaltung gemäß einem zweiten Ausführungsbeispiel.

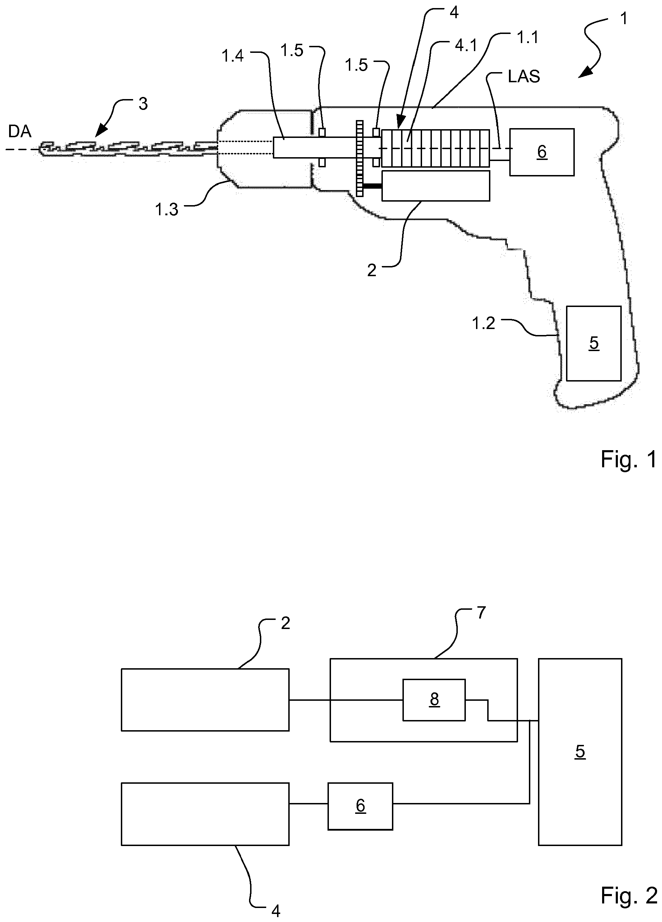

Figur 1 zeigt beispielhaft und schematisch eine akkubetriebene Ultraschall-Handbohrmaschine 1, nachfolgend als Handbohrmaschine bezeichnet. Die Handbohrmaschine 1 weist in an sich bekannter Weise ein Gehäuse 1.1 auf, an dem ein Handgriff 1.2 vorgesehen ist, um die Handbohrmaschine 1 händisch führen zu können. An dem Handgriff 1.2 sind Steuermittel, beispielsweise in Form eines Druckknopfs vorgesehen, mittels denen die Drehzahl der Handbohrmaschine 1 steuerbar ist.

Zudem weist die Handbohrmaschine 1 eine Werkzeugaufnahme beispielsweise in Form einer Spannvorrichtung 1.3 auf, die zur Halterung eines Bohrwerkzeugs 3 ausgebildet ist. Die Spannvorrichtung 1.3 kann insbesondere eine Schnellspannvorrichtung zur drehfesten Verbindung des Bohrwerkzeugs 3 mit einer drehend im Gehäuse gelagerten Welle 1.4 sein. Unter "Bohrwerkzeug" werden sämtliche Werkzeuge mit geradem Werkzeugschaft verstanden, insbesondere solche, die eine geometrisch bestimmte Schneide zur Erstellung von Bohrlöchern aufweisen. Mit derartigen Bohrwerkzeugen lassen sich unterstützt durch die Ultraschallschwingungen vorteilhaft Löcher in spröde Materialien, beispielsweise Ziegel, Beton oder aber auch Verbundwerkstoffe einbringen.

Die Welle 1.4, die beispielsweise als Sonotrode ausgebildet sein kann, ist im gezeigten Ausführungsbeispiel durch mehrere Lagerstellen 1.5 rotativ gelagert, so dass die Welle 1.4 um eine Drehachse DA drehbar ist. Die Welle 1.4 steht mit einem Motor 2 in Wirkverbindung. Durch die Wirkverbindung wird eine vom Motor 2 bewirkte Drehbewegung über die Welle 1.4 und die Spannvorrichtung 1.3 auf das Bohrwerkzeug 3 übertragen.

Zur Erzeugung von Schwingungen am Bohrwerkzeug 3 ist eine Schwingungserregereinheit 4 vorgesehen. Diese Schwingungserregereinheit 4 weist beispielsweise mehrere Piezoelemente 4.1 auf, die stapelartig hintereinander entlang einer Längsachse LAS der Schwingungserregereinheit 4 angeordnet sind. Die Längsachse LAS der Schwingungserregereinheit 4 kann dabei parallel zur Drehachse DA angeordnet sein, insbesondere aber mit der Drehachse DA zusammenfallen, d.h. die Längsachse LAS der Schwingungserregereinheit 4 und die Drehachse DA der Welle 1.4 bzw. des Bohrwerkzeugs 3 bilden eine gemeinsame Achse. Die Schwingungserzeugung kann mittels zumindest eines Piezoelements unter Nutzung des piezoelektrischen Effekts oder durch zumindest ein magnetostriktives Element unter Nutzung des Effekts der Magnetostriktion erfolgen.

Die Schwingungserregereinheit 4 ist vorzugsweise mit einer Sonotrode gekoppelt, über die die Schwingungen auf die Spannvorrichtung 1.3 übertragen werden. Die Sonotrode ist hierbei mit der Spannvorrichtung 1.3 in geeigneter Weise verbunden. Insbesondere kann die Sonotrode einen integralen Bestandteil der Spannvorrichtung 1.3 bilden und beispielsweise den Schaft des Bohrwerkzeugs 3 aufnehmen. Beispielsweise kann die Welle 1.4 durch eine Sonotrode gebildet werden.

Die Schwingungserregereinheit 4 ist mit einer Ansteuereinheit 6 verbunden, die zur elektrischen Ansteuerung der Schwingungserregereinheit 4 ausgebildet ist. Insbesondere beaufschlagt die Ansteuereinheit 6 die Schwingungserregereinheit 4 mit einem elektrischen Signal, um diese in Schwingungen im Ultraschallbereich zu versetzen. Die Schwingfrequenz kann dabei im Bereich zwischen 20 kHz und 60 kHz liegen, bevorzugt im Bereich zwischen 20 kHz und 40 kHz.

Über die Spannvorrichtung 1.3 ist das Bohrwerkzeug 3 mit der Schwingungserregereinheit 4 schwingungsgekoppelt, d.h. die von der Schwingungserregereinheit 4 erzeugten Schwingungen werden auf das Bohrwerkzeug 3 übertragen, so dass der Bohrvorgang schwingungsunterstützt erfolgt.

Die Schwingungserregereinheit 4 kann insbesondere zur Erzeugung von longitudinalen Ultraschallschwingungen ausgebildet sein. Durch diese longitudinalen Ultraschallschwingungen wird das Bohrwerkzeug 3 in axialer Richtung (axial in Bezug auf die Drehachse DA) ähnlich einem mechanischen Schlagwerk einer Schlagbohrmaschine in Bewegung versetzt. Dadurch kann durch die Ultraschallschwingungen unterstützt ein hoher Materialabtrag an dem zu bohrenden Material erreicht werden.

Wie in Fig. 1 ersichtlich, weist die Handbohrmaschine 1 einen aufladbaren Akkumulator 5 auf, über den die Handbohrmaschine 1 mit elektrischer Energie versorgt wird. Insbesondere werden der Motor 2, die Schwingungserregereinheit 4 und die zur Steuerung der Handbohrmaschine 1 vorgesehene Steuerelektronik durch den Akkumulator 5 mit elektrischer Energie versorgt.

Um zu verhindern, dass bei hohen Belastungszuständen der Handbohrmaschine 1 die Energieversorgung der Schwingungserregereinheit 4 derart beeinträchtigt wird, dass keine oder nur noch geringe Ultraschallschwingungen erzeugt werden, ist eine Priorisierungsschaltung 7 vorgesehen, die zumindest zeitweise die Energieversorgung der Schwingungserregereinheit 4 gegenüber der Energieversorgung des Motors 2 priorisiert.

Fig. 2 zeigt in einer schematischen Darstellung ein erstes Ausführungsbeispiel einer Priorisierungsschaltung 7, über die der Motor 2 mit dem Akkumulator 5 gekoppelt ist. Die Priorisierungsschaltung 7 umfasst eine Strombegrenzungsschaltung 8. Diese Strombegrenzungsschaltung 8 kann beispielsweise eine aus diskreten elektrischen Bauelementen gebildete Schaltung, insbesondere eine Transistorschaltung sein. Über diese Strombegrenzungsschaltung 8 wird der Motor 2 mit elektrischer Energie versorgt, d.h. der vom Akkumulator 5 abgegebene elektrische Strom wird über die Strombegrenzungsschaltung 8 dem Motor 2 zugeführt. Die Strombegrenzungsschaltung 8 ist dazu ausgebildet, die Stromstärke des dem Motor 2 zugeführten elektrischen Stroms nach oben hin zu begrenzen. Hierzu können die in der Strombegrenzungsschaltung 8 enthaltenen elektrischen Bauelemente derart dimensioniert und miteinander verschaltet sein, dass der Strom auf einen vorgegebenen Maximalwert begrenzt wird. Dieser Maximalwert ist vorzugsweise derart gewählt, dass selbst dann, wenn elektrischer Strom mit einer Stromstärke gemäß diesem Maximalwert dem Motor 2 zugeführt wird, eine hinreichende Funktion der Schwingungserregereinheit 4 sichergestellt ist, d.h. die von der Schwingungserregereinheit 4 erzeugte Ultraschallschwingung nicht oder nur unwesentlich beeinträchtigt ist.

Dadurch kann sichergestellt werden, dass selbst bei hohen Belastungszuständen, bei denen beispielsweise die Drehzahl des Motors erheblich reduziert ist, die durch die Schwingungserregereinheit 4 erzeugte Ultraschallschwingung aufrechterhalten werden kann.

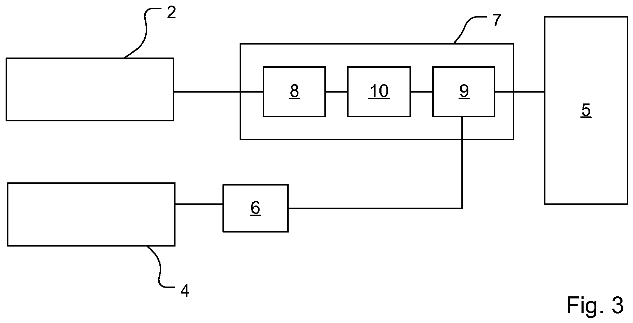

Fig. 3 zeigt eine weitere Ausführungsform einer Priorisierungsschaltung 7, über die der Motor 2 mit dem Akkumulator 5 gekoppelt ist, in einer schematischen Darstellung.

Der wesentliche Unterschied der Priorisierungsschaltung 7 gemäß Fig. 3 zu der vorbeschriebenen Priorisierungsschaltung besteht darin, dass die Priorisierungsschaltung zur betriebszustandsabhängigen Priorisierung der Schwingungserregereinheit 4 ausgebildet ist, und zwar derart, dass eine betriebszustandsabhängige Messgröße mit einer Bezugsgröße verglichen wird und abhängig von dem Vergleichsergebnis die Priorisierung der Schwingungserregereinheit 4 vollzogen wird oder nicht.

Die Priorisierungsschaltung 7 umfasst vorzugsweise einen Messschaltungsteil 9, eine Vergleichseinrichtung 10 und eine Strombegrenzungsschaltung 8.

Der Messschaltungsteil 9 ist vorzugsweise dazu ausgebildet, Informationen über eine betriebszustandsabhängige Messgröße und eine Bezugsgröße bereitzustellen. Die betriebszustandsabhängige Messgröße kann insbesondere die Stromstärke des elektrischen Stroms sein, der dem Motor 2 zugeführt wird oder aber eine zu der Stromstärke proportionale Messgröße (beispielsweise eine zu dem elektrischen Strom direkt proportionale Spannung). Alternativ können auch andere betriebszustandsabhängige Messgrößen verwendet werden, die eine Information über die elektrische Last des Motors 2 liefern.

Die Bezugsgröße ist vorzugsweise ebenfalls eine vom Betriebszustand der Handbohrmaschine 1 abhängige Größe. Alternativ kann diese aber auch eine feste, nicht vom Betriebszustand abhängige Bezugsgröße sein. Die Bezugsgröße kann beispielsweise die Stromstärke des elektrischen Stroms sein, der der Schwingungserregereinheit 4 zugeführt wird, oder eine zu diesem Strom direkt proportionale Größe (beispielsweise eine zu dem elektrischen Strom direkt proportionale Spannung). Alternativ kann die Bezugsgröße beispielsweise die Stromstärke des elektrischen Gesamtstroms sein, der durch den Akkumulator 5 bereitgestellt wird, oder eine zu diesem Strom direkt proportionale Größe (beispielsweise eine zu dem elektrischen Strom direkt proportionale Spannung).

Basierend auf der betriebszustandsabhängigen Messgröße und der Bezugsgröße kann bestimmt werden, welchen Anteil die elektrische Last des Motors 2 an der elektrischen Gesamtlast hat und basierend darauf entschieden werden, ob eine energetische Priorisierung der Schwingungserregereinheit 4 gegenüber dem Motor 2 vorgenommen werden soll oder nicht.

Der Messschaltungsteil 9 ist vorzugsweise mit einer Vergleichseinrichtung 10 gekoppelt. Die Vergleichseinrichtung 10 kann eine aus diskreten elektrischen Bauelementen aufgebaute elektrische Schaltung sein oder zumindest einen Mikrokontroller enthalten. Die Vergleichseinrichtung 10 ist dazu ausgebildet, die vom Messschaltungsteil 9 bereitgestellten Informationen hinsichtlich der betriebszustandsabhängigen Messgröße und der Bezugsgröße zu empfangen, auszuwerten und ein Ergebnis der Auswertung bereitzustellen. Insbesondere vergleicht die Vergleichseinrichtung 10 die betriebszustandsabhängige Messgröße und die Bezugsgröße und stellt eine Ausgangsinformation bereit, abhängig von der die energetische Priorisierung der Schwingungserregereinheit 4 gegenüber dem Motor 2 vorgenommen wird oder nicht. Beispielsweise kann die Vergleichseinrichtung 10 ein Verhältnis zwischen der betriebszustandsabhängigen Messgröße und der Bezugsgröße ermitteln und dieses Verhältnis mit einem Schwellwert vergleichen. Abhängig von dem Vergleichsergebnis kann dann die energetische Priorisierung der Schwingungserregereinheit 4 gegenüber dem Motor 2 eingeleitet werden.

Vorzugsweise wirkt die Vergleichseinrichtung 10 mit einer Strombegrenzungsschaltung 8 zusammen, mittels der der dem Motor 2 zugeführte elektrische Strom begrenzt werden kann. Die Strombegrenzungsschaltung 8 empfängt insbesondere die von der Vergleichseinrichtung 10 bereitgestellte Ausgangsinformation und begrenzt den elektrischen Strom, der dem Motor 2 zugeführt wird, abhängig von dieser Ausgangsinformation. Dadurch kann eine betriebszustandsabhängige bzw. von dem Verhältnis aus elektrischer Last der Schwingungserregereinheit 4 und elektrischer Last des Motors 2 abhängige energetische Priorisierung der Schwingungserregereinheit 4 vorgenommen werden.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Ultraschall-Handbohrmaschine
- 1.1: Gehäuse
- 1.2: Handgriff
- 1.3: Spannvorrichtung
- 1.4: Welle
- 1.5: Lagerstelle
- 2: Motor
- 3: Bohrwerkzeug
- 4: Schwingungserregereinheit
- 4.1: Piezoelement
- 5: Akkumulator
- 6: Ansteuereinheit
- 7: Priorisierungsschaltung
- 8: Strombegrenzungsschaltung
- 9: Messschaltungsteil
- 10: Vergleichseinrichtung

- DA: Drehachse
- LAS: Längsachse des Schwingungserregers

## Patentansprüche

1. Ultraschall-Handbohrmaschine umfassend einen Motor (2) zum rotativen Antrieb eines Bohrwerkzeugs (3) um eine Drehachse (DA) und eine Schwingungserregereinheit (4), die zur Erzeugung von Ultraschallschwingungen ausgebildet ist, wobei der Motor (2) und die Schwingungserregereinheit (4) durch einen Akkumulator (5) mit elektrischer Energie versorgt werden, **dadurch gekennzeichnet, dass** der Motor (2) über eine Priorisierungsschaltung (7) mit dem Akkumulator (5) gekoppelt ist, und dass die Priorisierungsschaltung (7) dazu ausgebildet ist, zumindest zeitweise die Versorgung der Schwingungserregereinheit (4) mit elektrischer Energie gegenüber der Versorgung des Motors (2) mit elektrischer Energie zu priorisieren.

2. Ultraschall-Handbohrmaschine nach Anspruch 1, **dadurch gekennzeichnet, dass** die Priorisierungsschaltung (7) eine Strombegrenzungsschaltung (8) umfasst, die dazu ausgebildet ist, die Stromstärke des den Motor (2) durchfließenden elektrischen Stroms nach oben hin zu begrenzen.

3. Ultraschall-Handbohrmaschine nach Anspruch 2, **dadurch gekennzeichnet, dass** die Strombegrenzungsschaltung (8) dazu ausgebildet ist, den elektrischen Strom auf einen vorgegebenen Stromstärke-Maximalwert zu begrenzen.

4. Ultraschall-Handbohrmaschine nach einem der vorhergehenden Ansprüche, **dadurch gekennzeichnet, dass** die Priorisierungsschaltung (7) einen Messschaltungsteil (9) umfasst, der zumindest eine betriebszustandsabhängige Messgröße bereitstellt und dass eine Strombegrenzungsschaltung (8) vorgesehen ist, die dazu ausgebildet ist, abhängig von dieser betriebszustandsabhängigen Messgröße die Stromstärke des den Motor (2) durchfließenden elektrischen Stroms nach oben hin zu begrenzen.

5. Ultraschall-Handbohrmaschine nach Anspruch 4, **dadurch gekennzeichnet, dass** eine Vergleichseinrichtung (10) vorgesehen ist, die zum Vergleich der betriebszustandsabhängigen Messgröße mit einer Bezugsgröße ausgebildet ist und dass die Vergleichseinrichtung (10) zum Bereitstellen eines Vergleichsergebnisses ausgebildet ist, abhängig von dem die Begrenzung des den Motor (2) durchfließenden elektrischen Stroms erfolgt.

6. Ultraschall-Handbohrmaschine nach Anspruch 4 oder 5, **dadurch gekennzeichnet, dass** die betriebszustandsabhängige Messgröße eine elektrische Größe ist, die proportional, insbesondere direkt proportional zur Stromstärke des den Motor (2) durchfließenden elektrischen Stroms ist.

7. Ultraschall-Handbohrmaschine nach Anspruch 5 oder 6, **dadurch gekennzeichnet, dass** die Bezugsgröße eine elektrische Größe ist, die proportional, insbesondere direkt proportional zur Stromstärke des die Schwingungserregereinheit (4) durchfließenden elektrischen Stroms oder zum Gesamtstrom ist, der von dem Akkumulator (5) entnommen wird.

8. Ultraschall-Handbohrmaschine nach einem der vorhergehenden Ansprüchen, **dadurch gekennzeichnet, dass** die Priorisierungsschaltung (7) einen Mikrokontroller umfasst.

9. Ultraschall-Handbohrmaschine nach Anspruch 8, **dadurch gekennzeichnet, dass** der Mikrokontroller die Vergleichseinrichtung (10) bildet.

10. Ultraschall-Handbohrmaschine nach Anspruch 8 oder 9, **dadurch gekennzeichnet, dass** der Mikrokontroller zur Steuerung der Ultraschall-Handbohrmaschine derart ausgebildet ist, dass die Versorgung der Schwingungserregereinheit (4) mit elektrischer Energie gegenüber der Versorgung des Motors (2) mit elektrischer Energie zumindest zeitweise priorisiert ist.

11. Verfahren zum Betreiben einer Ultraschall-Handbohrmaschine (1), die einen Motor (2) zum rotativen Antrieb eines Bohrwerkzeugs (3) um eine Drehachse (DA), eine Schwingungserregereinheit (4) zur Erzeugung von Ultraschallschwingungen und einen Akkumulator (5) aufweist, mittels dem der Motor (2) und die Schwingungserregereinheit (4) mit elektrischer Energie versorgt werden, **dadurch gekennzeichnet, dass** eine Priorisierungsschaltung (7) vorgesehen ist, mittels der die elektrische Energieversorgung der Schwingungserregereinheit (4) gegenüber der elektrischen Energieversorgung des Motors (2) priorisiert wird.

12. Verfahren nach Anspruch 11, **dadurch gekennzeichnet, dass** durch die Priorisierungsschaltung (7) zumindest zeitweise eine Begrenzung der Stromstärke des den Motor (2) durchfließenden elektrischen Stroms nach oben hin bewirkt wird.

13. Verfahren nach Anspruch 12, **dadurch gekennzeichnet, dass** die Stromstärke auf einen betriebszustandsunabhängigen maximalen Schwellwert begrenzt wird oder dass eine Begrenzung der Stromstärke in Abhängigkeit eines Vergleichs vorgenommen wird, wobei bei dem Vergleich die Stromstärke des den Motor (2) durchfließenden elektrischen Stroms oder eine dazu proportionale betriebszustandsabhängige Messgröße mit einer Bezugsgröße verglichen wird.

14. Verfahren nach Anspruch 13, **dadurch gekennzeichnet, dass** die Bezugsgröße der die Schwingungserregereinheit (4) durchfließende elektrische Strom, der von dem Akkumulator (5) entnommene Gesamtstrom ist oder zu diesen Strömen proportionale Messgrößen sind.

15. Verfahren nach einem der Ansprüche 11 bis 14, **dadurch gekennzeichnet, dass** die Priorisierung der elektrischen Energieversorgung der Schwingungserregereinheit (4) gegenüber der elektrischen Energieversorgung des Motors (2) abhängig vom Ladezustand des Akkumulators (5) erfolgt.

## Claims

1. A handheld ultrasonic drilling machine comprising a motor (2) for rotatably driving a drilling tool (3) about an axis of rotation (DA) and a vibration exciter unit (4) which is designed to produce ultrasonic vibrations, the motor (2) and the vibration exciter unit (4) being supplied with electrical energy by a storage battery (5), **characterized in that** the motor (2) is coupled to the storage battery (5) by means of a prioritization circuit (7), and **in that** the prioritization circuit (7) is designed to prioritize, at least temporarily, the supply of the vibration exciter unit (4) with electrical energy over the supply of the motor (2) with electrical energy.

2. The handheld ultrasonic drilling machine according to claim 1, **characterized in that** the prioritization circuit (7) comprises a current limiting circuit (8) which is designed to limit the amperage of the electric current flowing through the motor (2) in an upward direction.

3. The handheld ultrasonic drilling machine according to claim 2, **characterized in that** the current limiting circuit (8) is designed to limit the electric current to a predetermined maximum amperage value.

4. The handheld ultrasonic drilling machine according to any one of the preceding claims, **characterized in that** the prioritization circuit (7) comprises a measuring circuit part (9), which provides at least one operating state-dependent measured variable, and **in that** a current limiting circuit (8) is provided, which is designed, depending on this operating state-dependent measured variable, to limit the amperage of the electric current flowing through the motor (2) in an upward direction.

5. The handheld ultrasonic drilling machine according to claim 4, **characterized in that** a comparison device (10) is provided, which is designed to compare the operating state-dependent measured variable with a reference variable, and **in that** the comparison device (10) is designed to provide a comparison result, on the basis of which the electric current flowing through the motor (2) is limited.

6. The handheld ultrasonic drilling machine according to claim 4 or 5, **characterized in that** the operating state-dependent measured variable is an electric variable which is proportional, in particular directly proportional, to the amperage of the electric current flowing through the motor (2).

7. The handheld ultrasonic drilling machine according to claim 5 or 6, **characterized in that** the reference variable is an electric variable which is proportional, in particular directly proportional, to the amperage of the electric current flowing through the vibration exciter unit (4) or to the total current drawn from the storage battery (5).

8. The handheld ultrasonic drilling machine according to any one of the preceding claims, **characterized in that** the prioritization circuit (7) comprises a microcontroller.

9. The handheld ultrasonic drilling machine according to claim 8, **characterized in that** the microcontroller constitutes the comparison device (10).

10. The handheld ultrasonic drilling machine according to claim 8 or 9, **characterized in that** the microcontroller for controlling the handheld ultrasonic drilling machine is designed in such a way that the supply of the vibration exciter unit (4) with electrical energy is prioritized, at least temporarily, over the supply of the motor (2) with electrical energy.

11. A method for operating a handheld ultrasonic drilling machine (1), which has a motor (2) for rotatably driving a drilling tool (3) about an axis of rotation (DA), a vibration exciter unit (4) for producing ultrasonic vibrations, and a storage battery (5), by means of which the motor (2) and the vibration exciter unit (4) are supplied with electrical energy, **characterized in that** a prioritization circuit (7) is provided, by means of which the electrical energy supply of the vibration exciter unit (4) is prioritized over the electrical energy supply of the motor (2).

12. The method according to claim 11, **characterized in that** the prioritization circuit (7) effects, at least temporarily, a limitation of the amperage of the electric current flowing through the motor (2) in an upward direction.

13. The method according to claim 12, **characterized in that** the amperage is limited to a maximum threshold value which is independent of the operating state, or **in that** the amperage is limited on the basis of a comparison, the current intensity of the electric current which flows through the motor (2) or a measured variable which is proportional thereto and is dependent on the operating state being compared with a reference variable in the comparison.

14. The method according to claim 13, **characterized in that** the reference variable is the electric current flowing through the vibration exciter unit (4), is the total current drawn from the storage battery (5) or are measured variables proportional to these currents.

15. The method according to any one of claims 11 to 14, **characterized in that** the electric power supply of the vibration exciter unit (4) is prioritized over the electric power supply of the motor (2) dependent on the state of charge of the storage battery (5).

## Revendications

1. Perceuse à main à ultrasons, comprenant un moteur (2) destiné à entraîner en rotation un outil de perçage (3) autour d'un axe de rotation (DA) et une unité d'excitation de vibrations (4) réalisée pour générer des vibrations ultrasoniques, le moteur (2) et l'unité d'excitation de vibrations (4) étant alimentés en énergie électrique par un accumulateur (5), **caractérisée en ce que**
le moteur (2) est couplé à l'accumulateur (5) par l'intermédiaire d'un circuit de priorisation (7), et
**en ce que** le circuit de priorisation (7) est réalisé pour rendre prioritaire, au moins temporairement, l'alimentation en énergie électrique de l'unité d'excitation de vibrations (4) par rapport à l'alimentation en énergie électrique du moteur (2).

2. Perceuse à main à ultrasons selon la revendication 1,
**caractérisée en ce que**
le circuit de priorisation (7) comprend un circuit de limitation de courant (8) qui est réalisé pour limiter vers le haut l'intensité du courant électrique traversant le moteur (2).

3. Perceuse à main à ultrasons selon la revendication 2,
**caractérisée en ce que**
le circuit de limitation de courant (8) est réalisé pour limiter le courant électrique à une valeur maximale prédéterminée de l'intensité.

4. Perceuse à main à ultrasons selon l'une des revendications précédentes, **caractérisée en ce que**
le circuit de priorisation (7) comprend une partie de circuit de mesure (9) qui fournit au moins une grandeur de mesure dépendant de l'état de fonctionnement, et
**en ce qu'**il est prévu un circuit de limitation de courant (8) qui est réalisé pour limiter vers le haut l'intensité du courant électrique traversant le moteur (2) en fonction de cette grandeur de mesure dépendant de l'état de fonctionnement.

5. Perceuse à main à ultrasons selon la revendication 4,
**caractérisée en ce que**
il est prévu un dispositif de comparaison (10) qui est réalisé pour comparer la grandeur de mesure dépendant de l'état de fonctionnement avec une grandeur de référence, et
**en ce que** le dispositif de comparaison (10) est réalisé pour fournir un résultat de comparaison en fonction duquel la limitation du courant électrique traversant le moteur (2) est effectuée.

6. Perceuse à main à ultrasons selon la revendication 4 ou 5,
**caractérisée en ce que**
la grandeur de mesure dépendant de l'état de fonctionnement est une grandeur électrique qui est proportionnelle, en particulier directement proportionnelle, à l'intensité du courant électrique traversant le moteur (2).

7. Perceuse à main à ultrasons selon la revendication 5 ou 6,
**caractérisée en ce que**
la grandeur de référence est une grandeur électrique proportionnelle, en particulier directement proportionnelle, à l'intensité du courant électrique traversant l'unité d'excitation de vibrations (4) ou au courant total prélevé dans l'accumulateur (5).

8. Perceuse à main à ultrasons selon l'une des revendications précédentes,
**caractérisée en ce que**
le circuit de priorisation (7) comprend un microcontrôleur.

9. Perceuse à main à ultrasons selon la revendication 8,
**caractérisée en ce que**
le microcontrôleur constitue le dispositif de comparaison (10).

10. Perceuse à main à ultrasons selon la revendication 8 ou 9, **caractérisée en ce que**
le microcontrôleur destiné à commander la perceuse à main à ultrasons est réalisé de telle sorte que l'alimentation en énergie électrique de l'unité d'excitation de vibrations (4) est au moins temporairement rendue prioritaire par rapport à l'alimentation en énergie électrique du moteur (2).

11. Procédé pour faire fonctionner une perceuse à main à ultrasons (1) qui comprend un moteur (2) destiné à entraîner en rotation un outil de perçage (3) autour d'un axe de rotation (DA), une unité d'excitation de vibrations (4) pour générer des vibrations ultrasoniques, et un accumulateur (5) au moyen duquel le moteur (2) et l'unité d'excitation de vibrations (4) peuvent être alimentés en énergie électrique,
**caractérisé en ce que**
il est prévu un circuit de priorisation (7) au moyen duquel l'alimentation en énergie électrique de l'unité d'excitation de vibrations (4) est rendue prioritaire par rapport à l'alimentation en énergie électrique du moteur (2).

12. Procédé selon la revendication 11,
**caractérisé en ce que**
le circuit de priorisation (7) procure au moins temporairement une limitation vers le haut de l'intensité du courant électrique traversant le moteur (2).

13. Procédé selon la revendication 12,
**caractérisé en ce que**
l'intensité du courant est limitée à une valeur seuil maximale indépendant de l'état de fonctionnement, ou
**en ce qu'**une limitation de l'intensité du courant est effectuée en fonction d'une comparaison, et, lors de la comparaison, l'intensité du courant électrique traversant le moteur (2) ou une grandeur de mesure proportionnelle à celle-ci et dépendant de l'état de fonctionnement est comparée à une grandeur de référence.

14. Procédé selon la revendication 13,
**caractérisé en ce que**
la grandeur de référence est le courant électrique traversant l'unité d'excitation de vibrations (4), le courant électrique total prélevé dans l'accumulateur (5), ou des grandeurs de mesure proportionnelles à ces courants.

15. Procédé selon l'une des revendications 11 à 14,
**caractérisé en ce que**
la priorisation de l'alimentation en énergie électrique de l'unité d'excitation de vibrations (4) par rapport à l'alimentation en énergie électrique du moteur (2) s'effectue en fonction de l'état de charge de l'accumulateur (5).
